# EUROPÄISCHE PATENTSCHRIFT

(11) **EP 1 985 979 B1**
(45) Veröffentlichungstag und Bekanntmachung des Hinweises auf die Patenterteilung: **10.08.2016**
(21) Anmeldenummer: 08154674.9
(22) Anmeldetag: 17.04.2008
(51) Int. Cl.: G01H 3/14

(54) **Vorrichtung und Verfahren zur Erfassung von auf eine Person übertragenen Schwingungen eines Fahrzeugs**
Method and apparatus for detecting the vibrations of an automobile acting on a person
Dispositif et procédé d'enregistrement d'oscillations d'un véhicule transmises à une personne

(30) Priorität: 23.04.2007 DE 102007019366
(43) Veröffentlichungstag der Anmeldung: 29.10.2008
(73) Patentinhaber: GRAMMER AG, 92224 Amberg (DE)
(72) Erfinder: Meyder, Volkhart, 64658, Fürth/Odenwald (DE); Pankoke, Steffen Dr.-Ing., 97387, Erlenbach (DE); Müller, Dieter, 97072, Würzburg (DE)
(74) Vertreter: Hannke, Christian

(56) Entgegenhaltungen:
- EP-A2- 1 752 747
- WO-A1-2006/080880
- US-A- 3 828 170
- US-A- 5 226 500

## Beschreibung

Die Erfindung betrifft eine Vorrichtung und ein Verfahren zur Erfassung von auf eine Person übertragene Schwingungen eines Fahrzeuges, wobei die Person einen gepolsterten und vorzugsweise gefederten Fahrzeugsitz eines Fahrzeuges benutzt, mittels mindestens einer Detektionseinheit zur Detektion von Schwingungswerten, gemäß den Oberbegriffen der Patentansprüche 1 und 11.

Vorrichtungen zur Detektion von Schwingungen, die in einem Fahrzeugsitz eingebaut sind, sind beispielsweise aus DE 10 2004 061 574 A1 bekannt. Derartige Vorrichtungen sind als flaches Gehäuse auf einer Sitzfläche, auf welcher die den Sitz benutzenden Person sitzt, angeordnet. Sie sind somit in ein Sitzpolster eingearbeitet und dauerhaft damit verbunden, so dass eine Nachrüstung von Fahrzeugsitzen mit derartigen Vibrationserfassungsvorrichtungen nur dann möglich ist, wenn das gesamte Sitzpolster ausgewechselt wird. Zudem Wirken derartige in das Sitzpolster eingearbeitete Vorrichtungen störend hinsichtlich der Bequemlichkeit des Fahrzeugsitzes, da hierdurch eine Beeinträchtigung des Polsterungseffektes und damit des Dämpfüngseffektes des Polsterelementes des Fahrzeugsitzes erhalten wird.

Aus US (3828170) ist eine Komfort-Level-Messvorrichtung bekannt, zum Messen und Auswerten von Vibrationen auf eine sich in einem Sitz befindende, Person, vorzugsweise in einem Militärfahrzeug. Die Messvorrichtung wird direkt am Sitz, auf dem die Person sitzt angebracht und beinhaltet einen Beschleunigungsmesser sowie eine Auswerteeinheit. Es werden Beschleunigungen in einer vertikalen, einer querlaufenden und einer vorwärts- und rückwärts gerichteten Richtung durch den Beschleunigungsmesser gemessen und und in Form von Spannungssignalen, welche proportional zu den Beschleunigungswerten sind, zur Auswerteeinheit übermittelt. In der Auswerteeinheit werden die Signale zunächst frequenzbewertet umgerechnet dann quadriert, gemittelt und aufsummiert. Aus diesem Wert wird eine mittlere von der Person absorbierte Kraft bestimmt.

Des Weiteren ist aus WO (2006080880) ein Vibrationsdosimeter bekannt, welches direkt an einem Fahrer eines Fahrzeugs oder an einem Fahrzeugsitz angebracht wird. Die Vibrationsmesswerte werden durch eine Anzeigeeinheit angezeigt und in einer Speichereinheit gespeichert. Die Vibrationen werden von einer 3-Achsen-Beschleunigungsmesseinheit gemessen und anhand verschiedener auswählbarer Methoden ausgewertet und in Einheiten bezüglich der Frequenzen umgewandelt.

Demzufolge liegt der vorliegenden Erfindung die Aufgabe zugrunde, eine Vorrichtung und ein Verfahren zur Verfügung zu stellen, um auf eine auf einem Fahrzeugsitz sitzende Person übertragene Schwingungen zu erfassen, indem eine Detektionseinheit derart an dem Fahrzeugsitz bzw. an einem Bereich des Fahrzeugsitzes anordenbar ist, dass ein Nachrüsten für jeden beliebigen Fahrzeugsitz möglich ist und dass die Detektionseinheit den Sitzkomfort des Fahrzeugsitzes, den die Person benutzt, nicht beeinträchtigt.

Diese Aufgabe wird vorrichtungsseitig durch die Merkmale des Patentanspruches 1 und verfahrensseitig durch die Merkmale des Patentanspruches 11 gelöst.

Die Aufgabe wird gelöst von einer Vorrichtung zur Erfassung von auf eine einen gepolsterten und vorzugsweise gefederten Fahrzeugsitz eines Fahrzeuges benutzenden Person übertragene Schwingungen eines Fahrzeuges, mittels mindestens einer Detektionseinheit zur Detektion von Schwingungswerten, wobei diese Detektionseinheit am Fahrzeugsitzrahmen oder einem damit verbundenen Bauteil angeordnet ist und eine Auswerteeinheit zum Auswerten der detektierten Schwingungsergebniswerte damit verbunden ist, um die Schwingungsergebniswerte der auf die Person wirkenden Schwingungen mit Hilfe eines Filters mittels einer vorbestimmten Übertragungsfunktion zu berechnen, welche vorausgehend ermittelt wird, indem eine Mehrzahl von Schwingungswerten an der Polsteroberfläche, an dem Fahrzeugsitzrahmen und am Fahrzeugboden gemessen wird, wobei der Filter verwendet wird zur Durchführung der Übertragungsfunktion, und Filterungswerte anwendet, die auf Differenzwerten zwischen dem Verhältnis von gemessenen Schwingungswerten an einer Polsteroberfläche des gepolsterten Fahrzeugsitzes zu gemessenen Schwingungswerten an dem Fahrzeugsitz kontaktierenden Fahrzeugboden und dem Verhältnis von den detektierten Schwingungswerten zu den gemessenen Schwingungswerten am Fahrzeugboden basieren. Eine derartige Anwendung einer Übertragungsfunktion zur Berechnung der effektiv auf die Person wirkenden Schwingungen ermöglicht, dass die Vorrichtung, welche innerhalb eines kleinen Gehäuses angeordnet sein kann, mittels einer Magnet-, Klebe- oder mechanischen Schnellverbindung an dem Fahrzeugsitzrahmen lösbar befestigt werden kann und somit eine nachträgliche Ausstattung jedes Fahrzeugsitzes zur Messung von derartigen Schwingungen auf einfache und schnelle Weise möglich ist.

Eine derartige Vorrichtung, die innerhalb eines Gehäuses angeordnet sein kann, und somit als sogenanntes Vibrationsdosimeter eingesetzt werden kann, kann mit einer separaten Energieversorgungseinheit, wie einem Akkumulator, ausgestattet sein, um kabellos und unabhängig von bordeigenen Stromversorgungsquellen betrieben zu werden: Nach Ablauf des geladenen Zustands des verwendeten Akkumulators, wie beispielsweise nach ca. 8 - 12 Stunden, ist die zulässige Mäximalfahrzeit für den Betrieb eines Nutzfahrzeuges, wie beispielsweise ein Lastkraftwagen, von Seiten eines individuellen Fahrers ohnehin vorbei, so dass das Gerät - auch zu Auswertezwecken - von dem Sitz abgenommen werden kann und an einen PC oder dergleichen mittels hierfür angeordneten Anschlussstellen angeschlossen werden kann. Hierdurch kann eine Auswertung mit Hilfe des PCs und hierfür beispielsweise vorgesehene Exceltabellen erfolgen.

Die Anschlussstellen können beispielsweise als USB-Anschlüsse mit entsprechenden Wandlereinrichtungen ausgestattet sein und alternativ oder zusätzlich Anschlusselemente für das Einstecken in Bordspannungssteckdosen ausgebildet sein. Derartige Akkumulatoren können ebenso als zwei AAA NiMH-Akkumulatoren mit ca. 1000 mAh oder AAA-Batterien ausgebildet sein.

Die auszulesenden Daten können vor dem stattfindenden Auslesevorgang digitalisiert werden und somit eine Übertragung derjenigen auf weitere Geräte, wie beispielsweise einen PC, vereinfachen. Auch eine RMS-Wert-Berechung sowie eine Normierung der Messdaten auf Interface können digital mittels Firmware auf Prozessor erfolgen.

Gemäß EU-Richtlinien Humanschwingungen 2002/44/EG ist jeder Arbeitgeber für die Auswertung der auf seine Arbeitnehmer einwirkenden Schwingungen eines Fahrzeuges bei Benutzung desselbigen als Fahrer verantwortlich. Insbesondere bei landwirtschaftlichen Maschinen und Baumaschinen müssen demzufolge die Schwingungen während eines Tages, welche auf die Person unmittelbar einwirken, gemessen werden. Eine anschließende Auswertung soll ergeben, ob ein durch die EU-Richtlinie vorgegebener Grenzwert der Schwingungen durch Aufsummierung der einzelnen Schwingungen überschritten worden ist. Es ist somit die Ausstattung eines Fahrzeugsitzes mit einem derartigen lösbaren Vibrationsdosimeter erforderlich, um auch denjenigen Fahrzeugen, die keine neu hergestellten Fahrzeugsitze, welche derartige Vibrationsdosimeter bereits eingebaut aufweisen können, mit derartigen Vibrationsdosimetern auszustatten.

Die Übertragungsfunktion wird mittels eines Filters durchgeführt, der Filterungswerte anwendet, die auf Differenzwerten zwischen dem Verhältnis von gemessenen Schwingungswerten an einer Polsteroberfläche des gepolsterten Fahrzeugsitzes zu gemessenen Schwingungswerten an dem den Fahrzeugsitz kontaktierenden Fahrzeugboden und dem Verhältnis von den detektierten Schwingungswerten zu den gemessenen Schwingungswerten am Fahrzeugboden basieren. Es wird somit in einem vorausgegangenen Modellversuch zur Ermittlung der Übertragungsfunktion eine Mehrzahl von Schwingungswerten an der Polsteroberfläche, an dem Fahrzeugsitzrahmen, an welchem das Vibrationsdosimeter befestigt werden kann, und am Fahrzeugboden gemessen, um die obigen Verhältnisse bilden zu können. Die Bildung dieser Verhältnisse lässt dann eine universell einsetzbare Übertragungsfunktion für die Anwendung auf alle gängigen Fahrzeugsitze ermitteln, so dass ein damit ausgestattetes Vibrationsdosimeter bzw. eine Vorrichtung zur Erfassung von den Schwingungen eines Fahrzeuges auch dann an beispielsweise dem Fahrzeugsitzrahmen oder dem Fahrzeugsitzfuß befestigt werden kann, wenn die im Bereich der Sitzoberfläche jeweils bestehenden Schwingungen nicht bekannt sind.

Gemäß einer bevorzugten Ausführungsform wird die Übertragungsfunktion bei Frequenzen der detektierten Schwingungswerte über 20 Hz deaktiviert, so dass derart hohe Frequenzen zwar bei einer Bewertung der Schwingungen während des Tages mitbeachtet werden, jedoch für eine Schwellenwertbetrachtung nicht berücksichtigt werden.

Vorteilhaft kann eine derartige Vorrichtung zur Erfassung der Schwingungen eine automatische Lagekorrektur durch eine eingebaute Neigungsfeststellungseinheit durchführen. Hierfür messen einzelne Sensoren statische Messwerte in insgesamt drei Richtungen und können hierdurch die genauen x-, y- und z-Richtungen ermitteln. Somit ist es nicht notwendig, dass sichergestellt wird, dass die Ausrichtung des Gerätes entsprechend den x-, y- und z-Achsen besteht, sondern der Benutzer kann das Gerät bzw. das Vibrationsdosimeter bzw. die Vorrichtung individuell ohne spezifische Ausrichtung an dem Fahrzeugsitzrahmen beispielsweise mittels einer Magnetverbindung befestigen.

Die Vorrichtung weist vorzugsweise einen Speicher zum Abspeichern der detektierten Schwingungswerte und/oder der Schwingungsergebniswerte auf. Ein derartiger Speicher kann dann über die bereits erwähnten Anschlusselemente mittels des daran angeschlossenen PCs ausgelesen werden, wodurch eine Auswertung der ausgelesenen Messergebnisse an dem PC möglich ist. Dies ermöglicht eine Auswertung der Messergebnisse hinsichtlich der Tagesdosis an Schwingungen, die auf die Person während des gesamten Tages eingewirkt sind und die Feststellung, ob vorgegebene Schwellenwerte hierbei überschritten worden sind. Zudem kann ausgewertet werden, wann und wie lange besonders starke Schwingungen auf die Person einwirken und ob die dem Fahrzeug zugrundeliegende Federung noch intakt ist.

Gemäß einer bevorzugten Ausführungsform weist die Detektionseinheit mindestens einen in drei senkrecht zueinander verlaufende Achsenrichtungen messenden Beschleunigungssensor auf, der dazu ausgelegt ist, Beschleunigungen von bis zu 20 · 9,81 m/s², vorzugsweise bis zu 16 · 9,81 m/s² je Achsenrichtung zu messen. Hierdurch werden die durch die Vibrationen erzeugten Beschleunigungen detektiert und beispielsweise als analoge oder digitale Signale an eine Speichereinheit oder direkt an eine Auswerteeinheit weitergegeben.

Die Vorrichtung kann vorteilhaft Anzeigeelemente zum Anzeigen einer Summe der pro Tag berechneten Schwingungsergebniswerte und der voraussichtlichen Summe pro Tag in Abhängigkeit von der Summe der bisher an diesem Tag berechneten Schwingungsergebniswerte und/oder einem Ladezustand einer Energieversorgeeinheit ausgestattet sein. Für die Berechnung der Summe der pro Tag berechneten Schwingungsergebniswerte findet eine Auswertung bereits innerhalb der Vorrichtung statt. Zudem kann die voraussichtliche Summe pro Tag in Abhängigkeit von der Summe der bisher an diesem Tag berechneten Schwingungsergebniswerte mittels der Anzeige zur Umsetzung einer Trendanalyse gezeigt werden, so dass der Fahrer bzw. die Person sich darüber informieren kann, ob sie bei Weiterverfolgung des momentanen Fahrzustandes mit der momentan einwirkenden Schwingungsfrequenz vorzeitig die Fahrt abbrechen muss, da ansonsten der vorgegebene Schwellenwert zu der maximal erlaubten Tagesdosis an Schwingungen überschritten werden würde. Eine derartige Trendanalyse-Anzeige kann auch dazu verwendet werden, eine Reduzierung der einwirkenden Vibrationen durch die Wahl von anderen Fahrstrecken oder durch Einlegen einer Pause zu erreichen, so dass der Schwellenwert nicht überschritten werden würde.

Zumindest die Detektionseinheit ist in einem am Fahrzeugsitz oder damit verbundenen Bauteil lösbar angebrachten Gehäuse angeordnet, welches vorzugsweise aus Kunststoff besteht und handlich flach und klein ausgebildet ist.

Ein Verfahren zur Erfassung von auf eine Person übertragene Schwingungen eines Fahrzeuges, wobei die Person einen gepolsterten und vorzugsweise gefederten Fahrzeugsitz (30) eines Fahrzeuges benutzt, verwendet mindestens eine Detektionseinheit zur Detektion von Schwingungswerten, wobei die Detektionseinheit am Fahrzeugsitzrahmen oder einem damit verbundenen Bauteil angeordnet wird und eine Auswerteeinheit damit verbunden wird, um die detektierten Schwingungswerte durch Anwendung einer vorbestimmten Übertragungsfunktion derart auszuwerten, dass Schwingungsergebniswerte der auf die Person wirkenden Schwingungen im Bereich der Oberfläche eines Sitzpolsterelementes des Fahrzeugsitzes berechnet werden und die Übertragungsfunktion mittels mindestens eines Filters angewendet wird, welche Filterungswerte anwendet, die auf Differenzwerten zwischen dem Verhältnis von gemessenen Schwingungswerten an einer Polsteroberfläche des gepolsterten Fahrzeugsitzes zu gemessenen Schwingungswerten an dem Fahrzeugsitz kontaktierenden Fahrzeugboden und dem Verhältnis von den detektierten Schwingungswerten zu den gemessenen Schwingungswerten am Fahrzeugboden basieren.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung eine Vorrichtung zur Erfassung von auf eine Person übertragene Schwingungen eines Fahrzeuges gemäß einer Ausführungsform der Erfindung;
- Fig. 2: in einer schematischen perspektivischen Seitendarstellung einen Fahrzeugsitz mit einer daran angeordneten erfindungsgemäßen Vorrichtung;
- Fig. 3a: einen ersten Abschnitt eines schematisch dargestellten Verfahrens zur Bestimmung einer Tagesexposition von Schwingungen, welchen ein Fahrer ausgesetzt ist;
- Fig. 3b: ein zweiter Abschnitt des schematisch dargestellten Verfahrens zur Bestimmung eines Tagesexposition von Schwingungen, welchen ein Fahrer ausgesetzt ist; und
- Fig. 4a und 4b: Korrekturfilterdaten zur Durchführung einer Übertragungsfunktion gemäß einer Ausführungsform der Erfindung.

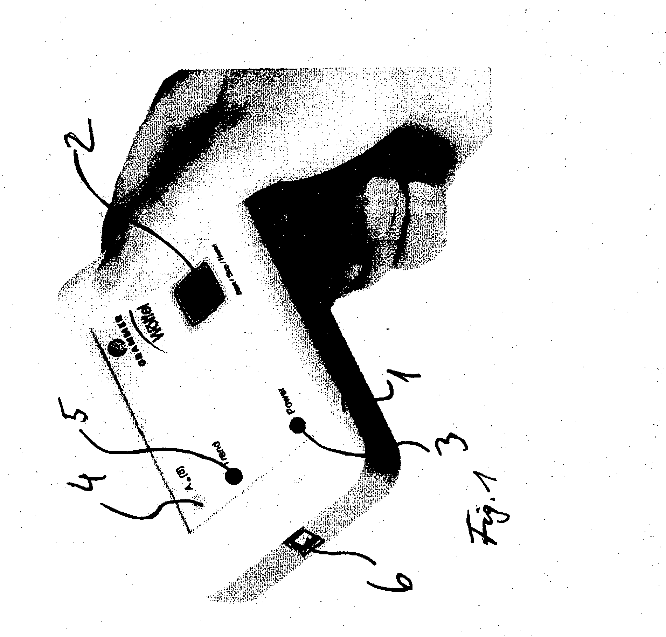

Fig. 1 zeigt in einer perspektivischen Darstellung eine Vorrichtung zur Erfassung von auf eine Person übertragene Schwingungen eines Fahrzeuges gemäß einer Ausführungsform der Erfindung. Die Vorrichtung weist ein Gehäuse 1 auf, welches einen Start- und Stoppknopf 2 beinhaltet. Zudem ist eine Anzeige 3, die den momentanen Ladezustand eines im Gehäuse 1 integrierten Akkumulators, der wiederaufladbar ist, zeigt.

Eine weitere Anzeige 4 gibt an, ob die erlaubte Tagesdosis an Vibrationen bereits erreicht worden ist.

Eine weitere Anzeige 5 stellt eine Trendanzeige dar, die anzeigt, dass bei deren Aufleuchten voraussichtlich der erlaubte maximale Schwellenwert für eine Tagesdosis an Schwingungen vorzeitig erreicht werden wird, wenn das Fahrzeug mit dem momentanen Schwingungsverhalten weiterhin in diesem Zustand betrieben bzw. gefahren werden würde.

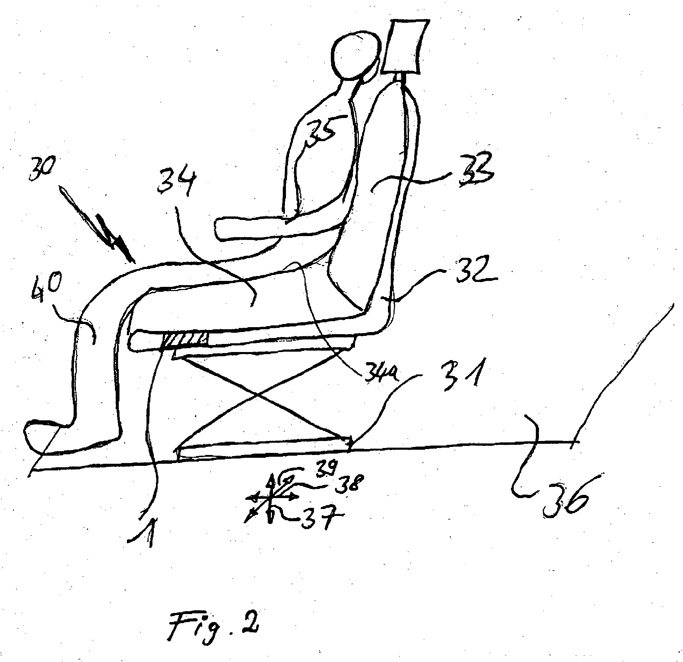

In Fig. 2 ist in einer seitlichen Darstellung ein Fahrzeugsitz mit der erfindungsgemäßen Vorrichtung bzw. dem erfindungsgemäßen Vibrationsdosimeter wiedergegeben. Das Vibrationsdosimeter ist mit seinem Gehäuse 1 seitlich an einem Fahrzeugsitzrahmen 32, der oberhalb des gefederten Fußes 31 angeordnet ist, mittels eines Schnellverschlusses befestigt. Der Fahrzeugsitz weist zudem eine gepolsterte Rückenlehne 33 und ein Sitzpolster 34 mit einer Oberfläche 34a auf. Eine Armlehne 35 ist ebenso angeordnet.

Mit dem Bezugszeichen 36 ist das Fahrzeug mit dem zugehörigen Bodenbereich, auf welchem der Fahrzeugsitz 30 angeordnet ist, angedeutet.

Das Vibrationsdosimeter misst die am Fahrzeugsitzrahmen detektierten Schwingungen sowohl in x-Richtung gemäß Bezugszeichen 39, als auch in y-Richtung gemäß Bezugszeichen 38 und in z-Richtung gemäß Bezugszeichen 37. Die Person 40 sitzt auf der Oberfläche 34a des Sitzpolsters 34.

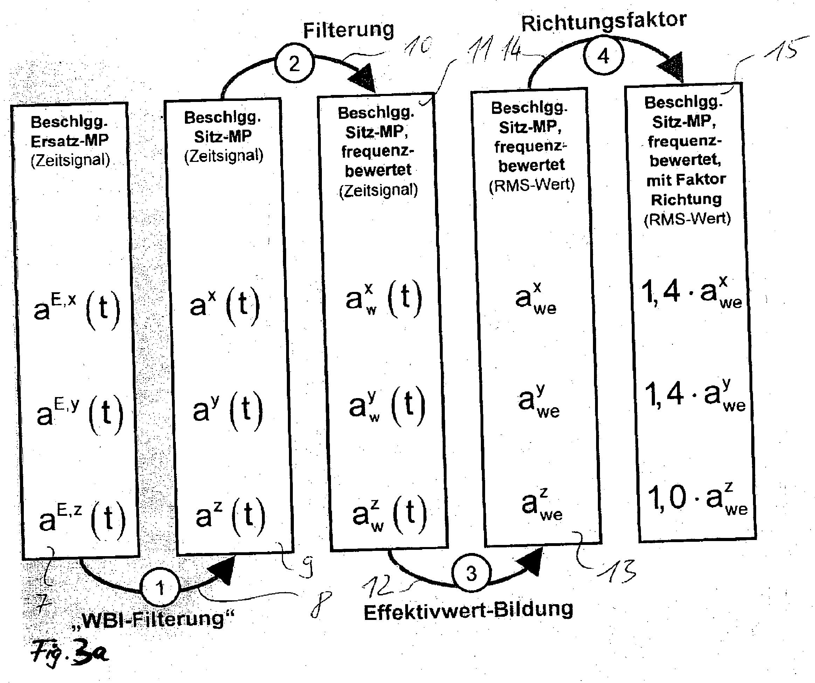

In Fig. 3a ist in einem Ablaufdiagramm ein Verfahren zur Bestimmung der Tagesexposition 7 wiedergegeben, dass die Beschleunigungen am Ersatzmesspunkt, also am Fahrzeugsitzrahmen, mittels eines in der Detektionseinheit vorhandenen Beschleunigungssensors zeitabhängig gemessen worden sind und als Messergebnisse vorliegen. Diese gemessenen Schwingungswerte werden mittels einer Übertragsfunktion 8 auf zeitabhängige Beschleunigungswerte in x-, y- und z-Richtung umgerechnet, die gemäß Bezugszeichen 9 vorliegen. Anschließend findet eine frequenzbewertete Umrechnung dieser Schwingungsergebniswerte 9 gemäß Bezugszeichen 10 und 11 nach ISO 2631 statt.

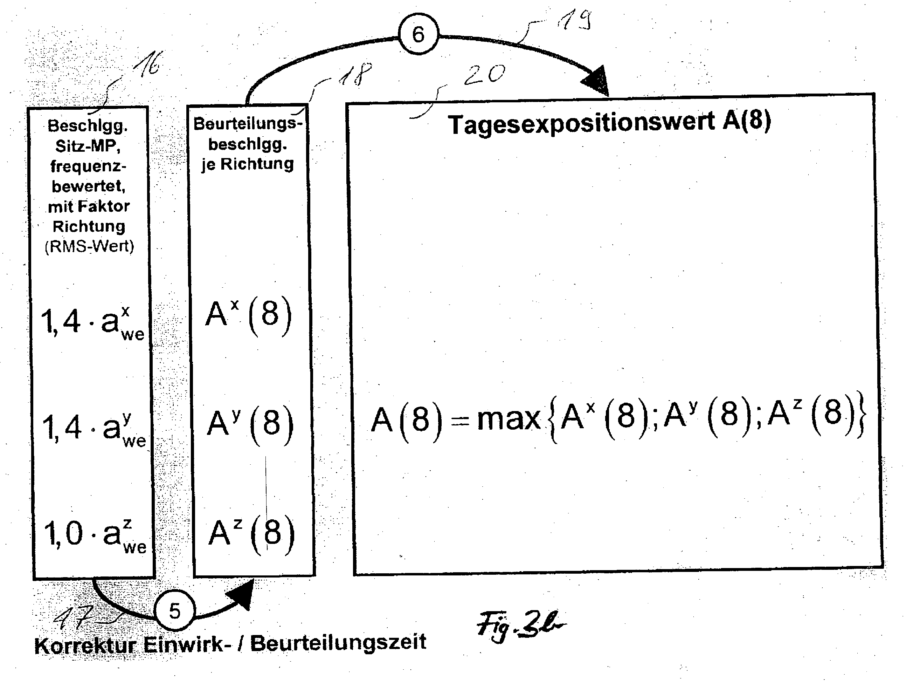

Nun wird eine Effektivwert-Bildung gemäß Bezugszeichen 12 zur Erhaltung der frequenzbewerteten Effektivwerte 13 durchgeführt. Hieran schließt sich eine Richtungsfaktorbildung gemäß Bezugszeichen 14 zum Erhalt von richtungsfaktorabhängigen frequenzbewerteten Schwingungswerten 15 an. Dies ermöglicht eine Aufteilung der verschiedenen Schwingungen in ihre Intensität gemessen über einen gesamten Tag hinweg auf die verschiedenen Richtungen, nämlich auf x-, y- und z-Richtung. Diese Werte werden in Fig. 3b mit Bezugszeichen 16 wiedergegeben. Anschließend wird eine Korrekturberechnung hinsichtlich der Einwirk- und Beurteilungszeit durchgeführt, die zu den Korrekturwerten 18 führen. Eine sich anschließende Auswertung gemäß Berechnung 19 ergibt die Tagesexpositionswerte 20 für die x-, y- und z-Richtung.

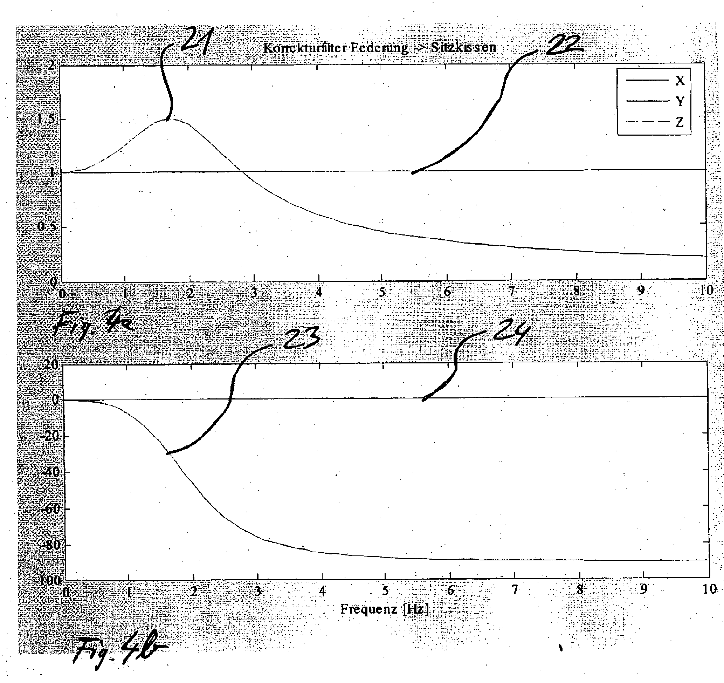

Unter Bezugnahme auf Fig. 4a und 4b wird die Berechnung der Filterdaten, welche für das Aufstellen der Übertragungsfunktion erforderlich ist und deren Herleitung beschrieben. In einem ersten Schritt wird der Fahrzeugsitz auf eine Rütteleinrichtung mit künstlich verursachten Schwingungen gesetzt. Anschließend wird der Fahrzeugsitz belastet. In einem dritten Schritt findet ein starkes Intensitätsrütteln des Fahrzeugsitzes statt, um nun an insgesamt drei Messpunkten, nämlich einmal an der Polsteroberfläche, einmal an dem Fahrzeugrahmen, an welchem das Vibrationsdosimeter angebracht werden soll, und an dem Bodenbereich einer Nutzfahrzeugkabine, Schwingungen zu erfassen.

Es werden nun die Verhältnisse der Schwingungswerte einmal von den gemessenen Schwingungswerten an der Polsteroberfläche zu den Bodenschwingungswerten und einmal von den gemessenen Schwingungswerten an dem Fahrzeugsitzrahmen zu den Bodenmesswerten bestimmt.

Anschließend findet für die Bildung eines Filters die Suche nach einem analytischen Ersatzmodell in Abhängigkeit von den x-, y- und z-Richtungen statt, die zu Betrags- und Phasen-Kurven in Abhängigkeit von der Frequenz gemäß dem Bezugszeichen 21 und 23 in Bezug auf die y-Richtung und gemäß den Bezugszeichen 22 und 24 in Bezug auf die y- und z-Richtung führen.

Diese Kurven werden mit ihren Messwerten in digitale Filterdaten transformiert. Nun liegen die für die Anwendung der Übertragungsfunktion erforderlichen Filterdaten in digitaler Form vor und können in der erfindungsgemäßen Auswerteeinheit mit Detektionseinheit angewendet werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Gehäuse
- 2: Start- und Stoppknopf
- 3, 4, 5: Anzeige
- 6: Anschlusselemente
- 7: Schwingungswerte
- 8: Übertragungsfunktion
- 9: Schwingungsergebniswerte
- 10: Filterung
- 11: frequenzbewertetes Zeitsignal
- 12: Effektivwert-Bildung
- 13: Effektivwerte
- 14: Richtungsfaktorbildung
- 15, 16: Schwingungswertung
- 18: Korrekturwerte
- 19: Berechnung
- 20: Tagesexpositionswerte
- 21, 22, 23, 24: Filterungswerte
- 30: Fahrzeugsitz
- 31: gefederter Fuß
- 32: Fahrzeugsitzrahmen
- 33: gepolsterte Rückenlehne
- 34: Sitzpolster
- 34a: Oberfläche
- 35: Armlehne
- 36: Fahrzeug
- 37: z-Richtung
- 38: y-Richtung
- 39: x-Richtung
- 40: Person

## Patentansprüche

1. Vorrichtung zur Erfassung von auf eine einen gepolsterten und vorzugsweise gefederten Fahrzeugsitz (30) eines Fahrzeuges (36) benutzenden Person (40) übertragene Schwingungen (37 - 39) eines Fahrzeuges (36), mittels mindestens einer Detektionseinheit zur Detektion von Schwingungswerten (7),
**dadurch gekennzeichnet, dass**
die Detektionseinheit am Fahrzeugsitzrahmen (32) oder einem damit verbundenen Bauteil angeordnet ist, und eine Auswerteeinheit zum Auswerten der detektierten Schwingungswerte (7) damit verbunden ist, um die Schwingungsergebniswerte (9) der auf die Person (40) wirkenden Schwingungen mit Hilfe mindestens eines Filters mittels einer vorbestimmten Übertragungsfunktion (8) zu berechnen, , welche vorausgehend ermittelt wird, indem eine Mehrzahl von Schwingungswerten an der Polsteroberfläche, an dem Fahrzeugsitzrahmen und am Fahrzeugboden gemessen wird, wobei der
Filter (21) verwendet wird zur Durchführung der Übertragungsfunktion (8) und Filterungswerte (21, 23) anwendet, die auf Differenzwerten zwischen dem Verhältnis von gemessenen Schwingungswerten an einer Polsteroberfläche (34a) des gepolsterten Fahrzeugsitzes (30) zu gemessenen Schwingungswerten an dem Fahrzeugsitz (30) kontaktierenden Fahrzeugboden (36) und dem Verhältnis von den detektierten Schwingungswerten (7) zu den gemessenen Schwingungswerten am Fahrzeugboden (36) basieren.

2. Vorrichtung nach Anspruch 1,
**dadurch gekennzeichnet, dass**
die Übertragungsfunktion (8) bei Frequenzen der detektierten Schwingungswerte (7) über 20 Hz deaktiviert ist.

3. Vorrichtung nach einem der vorangegangenen Anspruche,
**dadurch gekennzeichnet, dass**
die Vorrichtung einen Speicher zum Abspeichern der detektierten Schwingungswerte und/oder der Schwingungsergebniswerte aufweist.

4. Vorrichtung nach Anspruch 3,
**dadurch gekennzeichnet, dass**
in der Vorrichtung Anschlusselemente (6) angeordnet sind, die mit dem Speicher einerseits verbunden sind und andererseits an einem PC zum Auslesen der gespeicherten Schwingungswerte Daten anschließbar sind.

5. Vorrichtung nach einem der vorangegangenen Ansprüche,
**dadurch gekennzeichnet, dass**
die Detektionseinheit mindestens einen in drei senkrecht zueinander verlaufende Achsenrichtungen (37 - 39) messenden Beschleunigungssensor umfasst.

6. Vorrichtung nach Anspruch 5,
**dadurch gekennzeichnet, dass**
mit dem Beschleunigungssensor Beschleunigungen von bis zu 20 · 9,81 m/s², vorzugsweise bis zu 16 · 9,81 m/s² je Achsenrichtung messbar sind.

7. Vorrichtung nach einem der vorangegangenen Ansprüche,
**gekennzeichnet durch**
Anzeigeelemente (3 - 5) zum Anzeigen einer Summe der pro Tag berechneten Schwingungsergebniswerte, der voraussichtlichen Summe pro Tag in Abhängigkeit von der Summe der bisher an diesem Tag berechneten Schwingungsergebniswerte und/oder einem Ladezustand einer Energieversorgungseinheit.

8. Vorrichtung nach einem der vorangegangenen Ansprüche,
**dadurch gekennzeichnet, dass**
zumindest die Detektionseinheit in einem am Fahrzeugsitzrahmen (32) oder damit verbundenen Bauteil lösbar angebrachten Gehäuse (1) angeordnet ist.

9. Vorrichtung nach Anspruch 8,
**gekennzeichnet durch**
die im Gehäuse (1) angeordnete Energieversorgungseinheit zum Vorsorgen der Detektionseinheit und gegebenenfalls der Auswerteeinheit mit Energie.

10. Vorrichtung nach Anspruch 9,
**dadurch gekennzeichnet, dass**
die im Gehäuse (1) angeordneten Anschlusselemente (6) zum Anschließen der Vorrichtung an eine Ladestation zum elektrischen Aufladen der Energieversorgungseinheit geeignet sind.

11. Verfahren zur Erfassung von auf eine Person übertragene Schwingungen (37-39) eines Fahrzeuges (36), wobei die Person (40) einen gepolsterten und vorzugsweise gefederten Fahrzeugsitz (30) eines Fahrzeuges (36) benutzt und wobei mindestens eine Detektionseinheit zur Detektion von Schwingungswerten (7) verwendet wird,
**dadurch gekennzeichnet, dass**
die Detektionseinheit am Fahrzeugsitzrahmen (32) oder einem damit verbundenen Bauteil angeordnet wird und eine Auswerteeinheit damit verbunden wird, um die detektierten Schwingungswerte (7) durch Anwendung einer vorbestimmten Übertragungsfunktion (8) derart auszuwerten, dass Schwingungsergebniswerte (9) der auf die Person (40) wirkenden Schwingungen im Bereich der Oberfläche eines Sitzpolsterelementes des Fahrzeugsitzes berechnet werden und die Übertragungsfunktion (8) mittels mindestens eines Filters (21) angewendet wird, welche Filterungswerte (21, 23) anwendet, die auf Differenzwerten zwischen dem Verhältnis von gemessenen Schwingungswerten an einer Polsteroberfläche (34a) des gepolsterten Fahrzeugsitzes (30) zu gemessenen Schwingungswerten an dem Fahrzeugsitz (30) kontaktierenden Fahrzeugboden (36) und dem Verhältnis von den detektierten Schwingungswerten (7) zu den gemessenen Schwingungswerten am Fahrzeugboden (36) basieren.

## Claims

1. Apparatus for detecting vibrations (37-39) of a vehicle (36) that are acting on a person (40) using an upholstered and preferably spring-loaded vehicle seat (30) of a vehicle (36), by means of at least one detection unit for detecting vibrational values (7), **characterised in that** the detection unit is arranged on the vehicle seat frame (32) or on a component connected thereto, and an evaluation unit for evaluating the detected vibrational values (7) is connected to said detection unit in order to calculate, using at least one filter, the vibrational result values (9) of the vibrations acting on the person (40) by means of a predetermined transfer function (8), which is determined in advance by a plurality of vibrational values being measured on the cushion surface, on the vehicle seat frame and on the vehicle floor, the filter (21) being used to carry out the transfer function (8) and applying filtering values (21, 23) that are based on difference values between the ratio of measured vibrational values on a cushion surface (34a) of the upholstered vehicle seat (30) to measured vibrational values on the vehicle floor (36) in contact with the vehicle seat (30) and the ratio of the detected vibrational values (7) to the measured vibrational values on the vehicle floor (36).

2. Apparatus according to claim 1, **characterised in that** the transfer function (8) is deactivated when the frequencies of the detected vibrational values (7) are above 20 Hz.

3. Apparatus according to any of the preceding claims, **characterised in that** the apparatus comprises a storage for storing the detected vibrational values and/or the vibrational result values.

4. Apparatus according to claim 3, **characterised in that** connecting elements (6) are arranged in the apparatus, which are connected at one end to the storage and can be connected at the other end to a PC in order to read out the stored vibrational value data.

5. Apparatus according to any of the preceding claims, **characterised in that** the detection unit comprises at least one acceleration sensor which measures in three axial directions (37-39) extending perpendicularly to one another.

6. Apparatus according to claim 5, **characterised in that** the acceleration sensor can measure accelerations of up to 20 · 9.81 m/s2, preferably up to 16 · 9.81 m/s2 in each axial direction.

7. Apparatus according to any of the preceding claims, **characterised by** display elements (3-5) for displaying a sum of the vibrational result values calculated for each day, the estimated sum for each day depending on the sum of the vibrational result values previously calculated on this day and/or a charge state of an energy supply unit.

8. Apparatus according to any of the preceding claims, **characterised in that** at least the detection unit is arranged in a housing (1) which is detachably attached to the vehicle seat frame (32) or to a component connected thereto.

9. Apparatus according to claim 8, **characterised by** the energy supply unit arranged in the housing (1) for supplying the detection unit and optionally the evaluation unit with energy.

10. Apparatus according to claim 9, **characterised in that** the connection elements (6) arranged in the housing (1) are suitable for connecting the apparatus to a charging station for electrically charging the energy supply unit.

11. Method for recording vibrations (37-39) of a vehicle (36) that are acting on a person, the person (40) using an upholstered and preferably spring-loaded vehicle seat (30) of a vehicle (36) and at least one detection unit being used to detect vibrational values (7), **characterised in that** the detection unit is arranged on the vehicle seat frame (32) or on a component connected thereto and an evaluation unit is connected to said detection unit in order to evaluate the detected vibrational values (7) by applying a predetermined transfer function (8) such that vibrational value results (9) for the vibrations acting on the person (40) in the region of the surface of a seat cushion element of the vehicle seat are calculated, and the transfer function (8) is applied by means of at least one filter (21) which applies filtering values (21, 23) that are based on difference values between the ratio of measured vibrational values on a cushion surface (34a) of the upholstered vehicle seat (30) to measured vibrational values on the vehicle floor (36) in contact with the vehicle seat (30) and the ratio of the detected vibrational values (7) to the measured vibrational values on the vehicle floor (36).

## Revendications

1. Dispositif d'enregistrement d'oscillations (37 - 39) d'un véhicule (36) transmises à une personne (40) utilisant un siège de véhicule (30) rembourré et de préférence suspendu d'un véhicule (36), au moyen d'au moins une unité de détection de valeurs de vibrations (7),
**caractérisé en ce que**
l'unité de détection est disposée sur le cadre du siège du véhicule (32) ou sur un composant qui est relié à celui-ci et une unité d'analyse est reliée à celle-ci pour l'analyse des valeurs de vibrations (7) détectées, afin de calculer les valeurs de résultats des vibrations (9) des vibrations agissant sur la personne (40) à l'aide d'au moins un filtre au moyen d'une fonction de transmission (8) prédéterminée, qui est déterminée préalablement, en mesurant une pluralité de valeurs de vibrations sur la surface du rembourrage, sur le cadre du siège de véhicule et sur le fond du véhicule, le filtre (21) étant utilisé pour l'exécution de la fonction de transmission (8) et des valeurs de filtre (21, 23) étant appliquées, qui sont basées sur des valeurs différentielles entre le rapport entre des valeurs de vibrations mesurées sur une surface de rembourrage (34a) du siège de véhicule (30) rembourré et des valeurs de vibrations mesurées sur le fond du véhicule (36) en contact avec le siège de véhicule (30) et le rapport entre les valeurs de vibrations (7) détectées et les valeurs de vibrations mesurées sur le fond du véhicule (36).

2. Dispositif selon la revendication 1,
**caractérisé en ce que** la fonction de transmission (8) est désactivée à des fréquences des valeurs de vibrations (7) détectées de plus de 20 Hz.

3. Dispositif selon l'une des revendications précédentes,
**caractérisé en ce que** le dispositif comprend un stockage pour stocker les valeurs de vibrations détectées et/ou des valeurs de résultats des vibrations.

4. Dispositif selon la revendication 3,
**caractérisé en ce que**, dans le dispositif, sont disposés des éléments de raccordement (6), qui sont reliés d'une part avec le stockage et d'autre part peuvent être raccordés à un PC pour la lecture des valeurs de vibrations enregistrées.

5. Dispositif selon l'une des revendications précédentes,
**caractérisé en ce que** l'unité de détection comprend au moins un capteur d'accélération mesurant dans trois directions axiales (37 - 39) s'étendant perpendiculairement entre elles.

6. Dispositif selon la revendication 5,
**caractérisé en ce que** le capteur d'accélération permet de mesurer des accélérations jusqu'à 20 · 9,81 m/s², de préférence jusqu'à 16 · 9,81 m/s² sur chaque direction axiale.

7. Dispositif selon l'une des revendications précédentes,
**caractérisé par** des éléments d'affichage (3 - 5) pour l'affichage d'une somme des valeurs de résultats de vibrations calculées par jour, de la somme prévisible par jour en fonction de la somme des valeurs de résultats de vibrations calculées préalablement ce jour et/ou d'un état de charge d'une unité d'alimentation en énergie.

8. Dispositif selon l'une des revendications précédentes,
**caractérisé en ce qu'**au moins l'unité de détection est disposé dans un boîtier (1) monté de manière amovible sur le cadre du siège de véhicule (32) ou sur un composant relié avec celui-ci.

9. Dispositif selon la revendication 8,
**caractérisé par** l'unité d'alimentation en énergie disposée dans le boîtier (1) pour l'alimentation de l'unité de détection et, le cas échéant, de l'unité d'analyse.

10. Dispositif selon la revendication 9,
**caractérisé en ce que** les éléments de raccordement (6) disposés dans le boîtier (1) permettent de raccorder le dispositif à une station de charge pour la charge électrique de l'unité d'alimentation en énergie.

11. Procédé d'enregistrement d'oscillations (37 - 39) d'un véhicule (36) transmises à une personne, la personne (40) utilisant un siège de véhicule (30) rembourré et de préférence suspendu d'un véhicule (36) et au moins une unité de détection étant utilisée pour la détection de valeurs de vibrations (7),
**caractérisé en ce que**
l'unité de détection est disposée sur le cadre du siège de véhicule (32) ou sur un composant relié à celui-ci et une unité d'analyse est reliée avec celle-ci, afin d'analyser les valeurs de vibrations (7) détectées en appliquant une fonction de transmission (8) prédéterminée de façon à ce que des valeurs de résultats de vibrations (9) des vibrations agissant sur la personne (40) soient calculées au niveau de la surface d'un élément de rembourrage du siège de véhicule et la fonction de transmission (8) est appliquée au moyen d'au moins un filtre (21), qui applique des valeurs de filtres (21, 23), qui sont basées sur des valeurs différentielles entre le rapport entre des valeurs de vibrations sur une surface de rembourrage (34a) du siège de véhicule (30) rembourré et des valeurs de vibrations mesurées sur le fond du véhicule (36) en contact avec le siège de véhicule (30) et le rapport entre les valeurs de vibrations (7) détectées et les valeurs de vibrations mesurées sur le fond du véhicule (36).
